# EUROPÄISCHE PATENTANMELDUNG

(11) **EP 2 098 688 A1**
(43) Veröffentlichungstag der Anmeldung: **09.09.2009**
(21) Anmeldenummer: 08004273.2
(22) Anmeldetag: 07.03.2008
(51) Int. Cl.: F01D 11/00, F01D 25/24, F16J 15/46

(54) **Gasturbine**

(71) Anmelder: SIEMENS AKTIENGESELLSCHAFT, 80333 München (DE)
(72) Erfinder: Milazar, Mirko, 46049 Oberhausen (DE)

(57) **Zusammenfassung**

Bei einer Gasturbine (1) mit einer Anzahl von jeweils zu Laufschaufelreihen zusammengefassten, an einer Turbinenwelle (8) angeordneten Laufschaufeln (12) und mit einer Anzahl von jeweils zu Leitschaufelreihen zusammengefassten, mittels jeweils einem Leitschaufelträger (16) an einem Turbinengehäuse befestigten Leitschaufeln (14) sollen bei einem hohen erreichbaren Wirkungsgrad die Übergangsbereiche zwischen den Turbinenstufen für eine hohe betriebliche Sicherheit und lange Lebensdauer ausgelegt sein. Dazu weist eine Anzahl von Leitschaufelträgern (16) Vertiefungen (32) auf, in die jeweils ein Dichtelement (30) eingesetzt ist, und wobei das Dichtelement (30) zur Anpressung an eine zugeordnete Kontaktfläche mit einem Druckmedium beaufschlagbar ist.

## Beschreibung

Die Erfindung betrifft eine Gasturbine mit einer Anzahl von jeweils zu Laufschaufelreihen zusammengefassten, an einer Turbinenwelle angeordneten Laufschaufeln und mit einer Anzahl von jeweils zu Leitschaufelreihen zusammengefassten, mittels jeweils einem Leitschaufelträger an einem Turbinengehäuse befestigten Leitschaufeln.

Gasturbinen werden in vielen Bereichen zum Antrieb von Generatoren oder von Arbeitsmaschinen eingesetzt. Dabei wird der Energieinhalt eines Brennstoffs zur Erzeugung einer Rotationsbewegung einer Turbinenwelle genutzt. Der Brennstoff wird dazu in einer Brennkammer verbrannt, wobei von einem Luftverdichter verdichtete Luft zugeführt wird. Das in der Brennkammer durch die Verbrennung des Brennstoffs erzeugte, unter hohem Druck und unter hoher Temperatur stehende Arbeitsmedium wird dabei über eine der Brennkammer nachgeschaltete Turbineneinheit geführt, wo es sich arbeitsleistend entspannt.

Zur Erzeugung der Rotationsbewegung der Turbinenwelle sind dabei an dieser eine Anzahl von üblicherweise in Schaufelgruppen oder Schaufelreihen zusammengefassten Laufschaufeln angeordnet, die über einen Impulsübertrag aus dem Arbeitsmedium die Turbinenwelle antreiben. Zur Strömungsführung des Arbeitsmediums in der Turbineneinheit sind zudem üblicherweise zwischen benachbarten Laufschaufelreihen mit dem Turbinengehäuse verbundene und zu Leitschaufelreihen zusammengefasste Leitschaufeln angeordnet.

Die Brennkammer der Gasturbine kann als so genannte Ringbrennkammer ausgeführt sein, bei der eine Vielzahl von in Umfangsrichtung um die Turbinenwelle herum angeordneten Brennern in einen gemeinsamen, von einer hochtemperaturbeständigen Umfassungswand umgebenen Brennkammerraum mündet.

Dazu ist die Brennkammer in ihrer Gesamtheit als ringförmige Struktur ausgestaltet. Neben einer einzigen Brennkammer kann auch eine Mehrzahl von Rohrbrennkammern vorgesehen sein.

Unmittelbar an die Brennkammer schließt sich in der Regel eine erste Leitschaufelreihe einer Turbineneinheit an, die zusammen mit der in Strömungsrichtung des Arbeitsmediums gesehen unmittelbar nachfolgenden Laufschaufelreihe eine erste Turbinenstufe der Turbineneinheit bildet, welcher üblicherweise weitere Turbinenstufen nachgeschaltet sind.

Die Leitschaufeln sind dabei jeweils über einen auch als Plattform bezeichneten Schaufelfuß an einem Leitschaufelträger der Turbineneinheit fixiert. Dabei kann der Leitschaufelträger zur Befestigung der Plattformen der Leitschaufeln ein Isolationssegment umfassen. Zwischen den in axialer Richtung der Gasturbine voneinander beabstandet angeordneten Plattformen der Leitschaufeln zweier benachbarter Leitschaufelreihen ist jeweils ein Führungsring am Leitschaufelträger der Turbineneinheit angeordnet. Ein derartiger Führungsring ist durch einen Radialspalt von den Schaufelspitzen der an gleicher axialer Position an der Turbinenwelle fixierten Laufschaufeln der zugehörigen Laufschaufelreihe beabstandet. Damit bilden die Plattformen der Leitschaufeln und die ihrerseits gegebenenfalls in Umfangsrichtung der Gasturbine segmentiert ausgeführten Führungsringe eine Anzahl von die äußere Begrenzung eines Strömungskanals für das Arbeitsmedium darstellenden Wandelementen der Turbineneinheit.

Bei der Auslegung derartiger Gasturbinen ist zusätzlich zur erreichbaren Leistung üblicherweise ein besonders hoher Wirkungsgrad ein Auslegungsziel. Eine Erhöhung des Wirkungsgrades lässt sich dabei aus thermodynamischen Gründen grundsätzlich durch eine Erhöhung der Austrittstemperatur erreichen, mit der das Arbeitsmedium aus der Brennkammer ab- und in die Turbineneinheit einströmt. Daher werden Temperaturen von etwa 1200 °C bis 1500 °C für derartige Gasturbinen angestrebt und auch erreicht.

Bei derartig hohen Temperaturen des Arbeitsmediums sind jedoch die diesem ausgesetzten Komponenten und Bauteile hohen thermischen Belastungen ausgesetzt. Um dennoch bei hoher Zuverlässigkeit eine vergleichsweise lange Lebensdauer der betroffenen Komponenten zu gewährleisten, ist üblicherweise eine Kühlung der betroffenen Komponenten, insbesondere der Umfassungswand der Brennkammer und/oder der Wandelemente der Turbineneinheit, vorgesehen. Die Kühlung kann beispielsweise durch eine Anzahl von in dem jeweiligen Wandabschnitt oder Wandelement integrierten Kühlmittelkanälen verwirklicht sein. Weiterhin kann eine An- oder Überströmung der vom Arbeitsmedium abgewandten Außenseite des jeweiligen Wandabschnitts oder Wandelements durch ein Kühlmittel vorgesehen sein. Zudem weist die der Strahlungswirkung der Brennerflammen direkt ausgesetzte Umfassungswand der Brennkammer neben einer die eigentliche Tragstruktur bildenden, üblicherweise aus einem metallischen Werkstoff hergestellten Gehäusewand auch noch eine durch eine Anzahl von Hitzeschildelementen gebildete Innenauskleidung auf. Insbesondere können dabei keramische und/oder mit einer besonders hitzebeständigen Schutzschicht ausgestattete Hitzeschildelemente als thermische Barriere zum Einsatz kommen.

Je nach Auslegungsziel der Gasturbine können die Leitschaufeln der Gasturbine entweder an einen gemeinsamen Leitschaufelträger befestigt werden oder es sind für jede Turbinenstufe separate Leitschaufelträger vorgesehen. Bei der Ausführung mit den separaten Leitschaufelträgern sind zum Ausgleich der während des Betriebs der Gasturbine infolge unterschiedlicher thermischer Ausdehnung auftretenden relativen Bewegungen der Bauteile zueinander im Übergangsbereich zwischen den einzelnen Turbinenstufen Ausgleichsspalte vorgesehen.

Diese Ausgleichsspalte sind ihrer Natur nach Axialspalte. Allerdings kann an den Übergangsstellen konstruktionsbedingt oder infolge unterschiedlich starker thermischer Ausdehnung in radialer Richtung auch ein radialer Versatz oder Oberflächensprung auftreten. Dieser radiale Versatz ist genau wie die Spaltbreite, also die Ausdehnung des Ausgleichsspalts in axialer Richtung, nicht konstant, sondern variiert zeitlich mit den verschiedenen Betriebszuständen und Temperaturverhältnissen in der Gasturbine. Minimale Spaltbreiten werden unter Umständen nicht während des Volllastbetriebes, sondern vielmehr während instationärer, thermisch nicht ausgeglichener Betriebsphasen, beispielsweise bei Lastwechseln, erreicht.

Damit können gerade während des Volllastbetriebes, bei dem das die Gasturbine durchströmende Arbeitsmedium besonders hohe Temperaturen aufweist, vergleichsweise große Spaltabstände auftreten, wodurch es unter Umständen zu einem Eintritt vergleichsweise großer Mengen von Heißgas in den Ausgleichsspalt kommt. Bei einem fortgesetzten Heißgaseinzug tritt ein erhöhter Verschleiß der den Spalt begrenzenden Turbinenbauteile auf, der schließlich zu die Betriebssicherheit der Gasturbine gefährdenden Beschädigungen führen kann. Die Reparatur derartiger Schadstellen ist zudem kostspielig und mit längeren Ausfallzeiten der Gasturbine verbunden.

Üblicherweise wird dem Bauteilverschleiß durch einen vermehrten Einsatz von Kühlluft, welche in die Spaltregion eingeleitet wird, entgegengewirkt. Es ist jedoch allgemein anzustreben, den Kühlluftverbrauch zu minimieren, da die Kühlluft üblicherweise aus dem Verdichtermassenstrom der Gasturbine abgezweigt wird, wodurch sich deren Gesamtwirkungsgrad vermindert.

Der Erfindung liegt daher die Aufgabe zugrunde, eine Gasturbine der oben genannten Art anzugeben, bei der bei einem hohen erreichbaren Wirkungsgrad die Übergangsbereiche zwischen den Turbinenstufen für eine hohe betriebliche Sicherheit und lange Lebensdauer ausgelegt sind.

Diese Aufgabe wird erfindungsgemäß gelöst, indem eine Anzahl von Leitschaufelträgern Vertiefungen aufweist, in die jeweils ein Dichtelement eingesetzt ist, und wobei das Dichtelement zur Anpressung an eine zugeordnete Kontaktfläche mit einem Druckmedium beaufschlagbar ist.

Die Erfindung geht dabei von der Überlegung aus, dass für eine möglichst lange Lebensdauer der den Ausgleichsspalt bildenden oder an ihn angrenzenden Turbinenkomponenten der durch den Einzug von Heißgas bedingte oder geförderte Bauteilverschleiß im Bereich der Ausgleichsspaltes verzögert werden sollte. Um im Interesse eines möglichst hohen Wirkungsgrades der Gasturbine den Verbrauch an Kühlluft zu minimieren, können daher Mittel oder Konzepte vorgesehen sein, die die Menge des in den Ausgleichsspalt eintretenden Heißgases verringern. Dies lässt sich prinzipiell dadurch erreichen, dass die Breite des Ausgleichsspaltes in seinem Mündungsbereich möglichst gering gehalten ist. Beispielsweise könnten im Bereich der jeweiligen Spaltkante an die Wandelemente angeformte und wechselseitig ineinander eingreifende Nut- und Federelemente ein eine Drosselwirkung aufweisendes Eintrittslabyrinth ausbilden.

Dabei ist jedoch zu beachten, dass die Breite des verbleibenden Restspaltes nicht beliebig klein ausgelegt sein kann. Aufgrund der angestrebten thermo-mechanischen Entkopplung der Turbineneinheit von der Brennkammer ist nämlich selbst eine kurzzeitige, während bestimmter Betriebszustände auftretende direkte Berührung der jeweiligen Gehäuseabschnitte ausgesprochen unerwünscht. Zudem könnte eine infolge eines in seiner Breite zu gering dimensionierten Ausgleichsspaltes erfolgende Berührung starke Materialspannungen in den vergleichsweise starren Gehäuseabschnitten oder Wandelementen hervorrufen, und es könnte zu Reibverschleiß oder hämmerndem Verschleiß kommen.

Stattdessen sollte ein für einen möglichst gasdichten Verschluss des Ausgleichsspaltes vorgesehenes Dichtelement im Hinblick auf die während des Betriebs der Gasturbine unter dem Einfluss unterschiedlicher Temperaturbedingungen variierende Spaltgeometrie zusätzliche Freiheitsgrade aufweisen, die eine flexible und bewegliche Anpassung an den angrenzenden Turbinenkomponenten ermöglichen. Zum Ausgleich wiederholt auftretender Längenschwankungen kann es auch wünschenswert sein, das Dichtelement aus einem besonders gut elastisch verformbaren Werkstoff zu fertigen. Die Dimensionierung des Dichtelements richtet sich dabei nach der Varianz der Breite des Ausgleichsspaltes im Betrieb. Einerseits sollte das Dichtelement so dünn gewählt werden, dass in einem Betriebszustand mit einer geringen Breite des Ausgleichsspaltes eine zu hohe Reibung vermieden wird, die zu erhöhtem Verschleiß des Dichtelements führen würde. Andererseits sollte das Dichtelement so dick sein, dass auch in einem Betriebszustand mit einer großen Breite des Ausgleichsspalts eine ausreichende Abdichtung gewährleistet ist. Diese entgegengesetzten Auslegungsziele könnten überwunden werden, wenn die Lage des Dichtelements während des Betriebs direkt beeinflussbar wäre. Dies ist erreichbar, indem das Dichtelement zur Anpressung an eine zugeordnete Kontaktfläche mit einem Druckmedium beaufschlagbar ist.

Eine besonders hohe Varianz ist im Betrieb bei den Breiten der Ausgleichsspalte zwischen den einzelnen Leitschaufelträgern gegeben. Daher ist die zugeordnete Kontaktfläche vorteilhafterweise eine Oberfläche eines benachbarten Leitschaufelträgers. Durch die konsequente Abdichtung der Zwischenräume zwischen den einzelnen Turbinenstufen zugeordneten Leitschaufelträgern kann ein Eindringen von heißem Gas und der damit verbundene Verschleiß sicher vermieden werden.

In vorteilhafter Ausgestaltung sind Luft oder Dampf als Druckmedium vorgesehen. Zur Kühlung der verschiedenen Bauteile der Gasturbine, wie z. B. der Turbinenschaufeln oder der Innenwände, ist üblicherweise Luft vorgesehen. Daher umfasst eine Gasturbine bereits die nötigen Bauteile zum Einpumpen und Verteilen von Luft im Inneren der Gasturbine. Eine Erweiterung dieses bereits vorhandenen Systems zur Bereitstellung von Druckluft für die Beaufschlagung des Dichtelements ist daher besonders einfach und mit geringem konstruktiven Aufwand möglich. Ebenso ist eine Bereitstellung von Dampf durch die ohnehin in der Gasturbine herrschenden vergleichsweise hohen Temperaturen einfach möglich.

Bei den abzudichtenden Spalten innerhalb der Gasturbine handelt es sich üblicherweise um vergleichsweise ausgedehnte Bereiche. Insbesondere die Spalte zwischen den einzelnen Leitschaufelträgern der Turbinenstufen sind Axialspalte, die den gesamten Radius der Gasturbine umfassen. Daher sollte das Dichtelement einen möglichst großen Bereich des Spaltes abdecken. Dazu ist eine Anzahl von Vertiefungen vorteilhafterweise länglich in Form einer Nut ausgebildet. Eine derartige Form der Vertiefung ermöglicht es zudem, das Dichtelement in einer einfachen, beispielsweise zylindrischen Form auszuführen. Dies ermöglicht einen besonders geringen Verbrauch von Druckmedium bei der Beaufschlagung des Dichtelements.

Die Dichtelemente sollten gegen Beschädigungen bei der Montage der Gasturbine wirksam geschützt sein. Dies ist erreichbar, indem die orthogonal zur Leitschaufelträgeroberfläche gemessene Dicke des jeweiligen Dichtelements gleich der Tiefe der Vertiefung oder geringer als die Tiefe der Vertiefung ist. Dadurch liegt das Dichtelement im drucklosen Zustand, z. B. während der Montage, vollständig innerhalb der Vertiefung, so dass kein Teil des Dichtelements aus der Leitschaufelträgeroberfläche hervorsteht. Damit kann das Dichtelement während der Montage nicht beschädigt werden.

In besonders vorteilhafter Ausgestaltung ist das jeweilige Dichtelement an einer Anzahl von Stellen der Vertiefung fixiert. Durch eine derartige Fixierung kehrt das Dichtelement im drucklosen Zustand stets in dieselbe Position zurück. Zudem wird der Ausdehnungsbereich des Dichtelements bei einer Beaufschlagung mit Druckmedium begrenzt. Dadurch wird insgesamt der Verbrauch von Druckmedium reduziert.

In weiterer vorteilhafter Ausgestaltung besteht das jeweilige Dichtelement aus einer Mehrzahl von miteinander verbundenen Gliedern. Ein aus mehreren Gliedern bestehendes Dichtelement ist besonders flexibel und passt sich daher besonders gut an den abzudichtenden Spalt an.

Die mit der Erfindung erzielten Vorteile bestehen insbesondere darin, dass durch die Beaufschlagung eines Dichtelements mit einem Druckmedium zur Anpressung an eine zugeordnete Kontaktfläche eine aktive Abdichtung der Spalte zwischen den einzelnen Turbinenstufen erfolgt, so dass eine Heißgaseinströmung und Überhitzung der temperaturempfindlichen Komponenten der Gasturbine konsequent vermieden werden kann. Durch die flexible Anpassung an den Spalt wird eine ausreichende Dichtung in allen Betriebszuständen der Gasturbine sichergestellt. Eine thermische Verformung der Bauteile kann daher ohne Nachteile akzeptiert werden und es ist ein insgesamt flexiblerer Betrieb der Gasturbine möglich.

Ein Ausführungsbeispiel der Erfindung wird anhand einer Zeichnung näher erläutert. Darin zeigen:
- FIG 1: einen Halbschnitt durch eine Gasturbine,
- FIG 2: ein Bauteil der Gasturbine mit einem Dichtelement,
- FIG 3: ein Bauteil der Gasturbine mit einer alternativen Ausführung der Dichtung,
- FIG 4: ein aus mehreren Gliedern aufgebautes Dichtelement,
- FIG 5: einen Querschnitt durch einen Leitschaufelträger mit einem Dichtelement im drucklosen Zustand, und
- FIG 6: einen Querschnitt durch einen Leitschaufelträger mit einem mit Druckmedium beaufschlagten Dichtelement.

Gleiche Teile sind in allen Figuren mit denselben Bezugszeichen versehen.

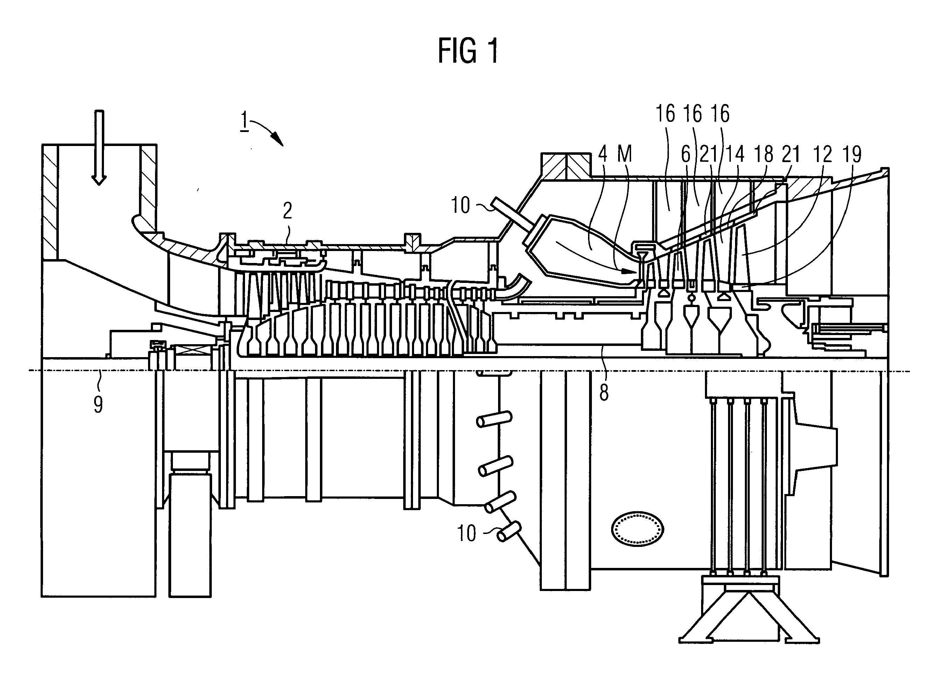

Die Gasturbine 1 gemäß FIG 1 weist einen Verdichter 2 für Verbrennungsluft, eine Brennkammer 4 sowie eine Turbineneinheit 6 zum Antrieb des Verdichters 2 und eines nicht dargestellten Generators oder einer Arbeitsmaschine auf. Dazu sind die Turbineneinheit 6 und der Verdichter 2 auf einer gemeinsamen, auch als Turbinenläufer bezeichneten Turbinenwelle 8 angeordnet, mit der auch der Generator bzw. die Arbeitsmaschine verbunden ist, und die um ihre Mittelachse 9 drehbar gelagert ist. Die in der Art einer Ringbrennkammer ausgeführte Brennkammer 4 ist mit einer Anzahl von Brennern 10 zur Verbrennung eines flüssigen oder gasförmigen Brennstoffs bestückt.

Die Turbineneinheit 6 weist eine Anzahl von mit der Turbinenwelle 8 verbundenen, rotierbaren Laufschaufeln 12 auf. Die Laufschaufeln 12 sind kranzförmig an der Turbinenwelle 8 angeordnet und bilden somit eine Anzahl von Laufschaufelreihen. Weiterhin umfasst die Turbineneinheit 6 eine Anzahl von feststehenden Leitschaufeln 14, die ebenfalls kranzförmig unter der Bildung von Leitschaufelreihen an einem Leitschaufelträger 16 der Turbineneinheit 6 befestigt sind. Die Laufschaufeln 12 dienen dabei zum Antrieb der Turbinenwelle 8 durch Impulsübertrag vom die Turbineneinheit 6 durchströmenden Arbeitsmedium M. Die Leitschaufeln 14 dienen hingegen zur Strömungsführung des Arbeitsmediums M zwischen jeweils zwei in Strömungsrichtung des Arbeitsmediums M gesehen aufeinander folgenden Laufschaufelreihen oder Laufschaufelkränzen. Ein aufeinander folgendes Paar aus einem Kranz von Leitschaufeln 14 oder einer Leitschaufelreihe und aus einem Kranz von Laufschaufeln 12 oder einer Laufschaufelreihe wird dabei auch als Turbinenstufe bezeichnet.

Jede Leitschaufel 14 weist eine Plattform 18 auf, die zur Fixierung der jeweiligen Leitschaufel 14 an einem Leitschaufelträger 16 der Turbineneinheit 6 als Wandelement angeordnet ist. Die Plattform 18 ist dabei ein thermisch vergleichsweise stark belastetes Bauteil, das die äußere Begrenzung eines Heißgaskanals für das die Turbineneinheit 6 durchströmende Arbeitsmedium M bildet. Jede Laufschaufel 12 ist in analoger Weise über eine auch als Schaufelfuß bezeichnete Plattform 19 an der Turbinenwelle 8 befestigt.

Zwischen den beabstandet voneinander angeordneten Plattformen 18 der Leitschaufeln 14 zweier benachbarter Leitschaufelreihen ist jeweils ein Führungsring 21 an einem Leitschaufelträger 16 der Turbineneinheit 6 angeordnet. Die äußere Oberfläche jedes Führungsrings 21 ist dabei ebenfalls dem heißen, die Turbineneinheit 6 durchströmenden Arbeitsmedium M ausgesetzt und in radialer Richtung vom äußeren Ende der ihm gegenüber liegenden Laufschaufeln 12 durch einen Spalt beabstandet. Die zwischen benachbarten Leitschaufelreihen angeordneten Führungsringe 21 dienen dabei insbesondere als Abdeckelemente, die das Innengehäuse 16 im Leitschaufelträger oder andere Gehäuse-Einbauteile vor einer thermischen Überbeanspruchung durch das die Turbine 6 durchströmende heiße Arbeitsmedium M schützen.

Die Brennkammer 4 ist im Ausführungsbeispiel als so genannte Ringbrennkammer ausgestaltet, bei der eine Vielzahl von in Umfangsrichtung um die Turbinenwelle 8 herum angeordneten Brennern 10 in einen gemeinsamen Brennkammerraum münden. Dazu ist die Brennkammer 4 in ihrer Gesamtheit als ringförmige Struktur ausgestaltet, die um die Turbinenwelle 8 herum positioniert ist.

In der gezeigten Gasturbine 1 ist für jede Turbinenstufe ein separater Leitschaufelträger 16 vorgesehen. Zwischen den Leitschaufelträgern 16 befinden sich dabei Spalte 24, die je nach Betriebszustand der Gasturbine 1 und den damit verbundenen unterschiedlichen thermischen Ausdehnungen der einzelnen Leitschaufelträger 16 kann die Breite dieser Spalte 24 variieren. Dadurch kann durch die Spalte 24 Arbeitsmedium M eintreten. Bei den in der Brennkammer 4 erzielten vergleichsweise hohen Temperaturen von etwa 1000 °C bis 1600 °C kann dies zu Beschädigungen an den nicht für diese Temperaturen ausgelegten Leitschaufelträgern 16 und anderer Bauteile führen. Daher sind die Spalte 24 mit jeweils einem oder mehreren variablen Dichtelementen 30 abgedichtet.

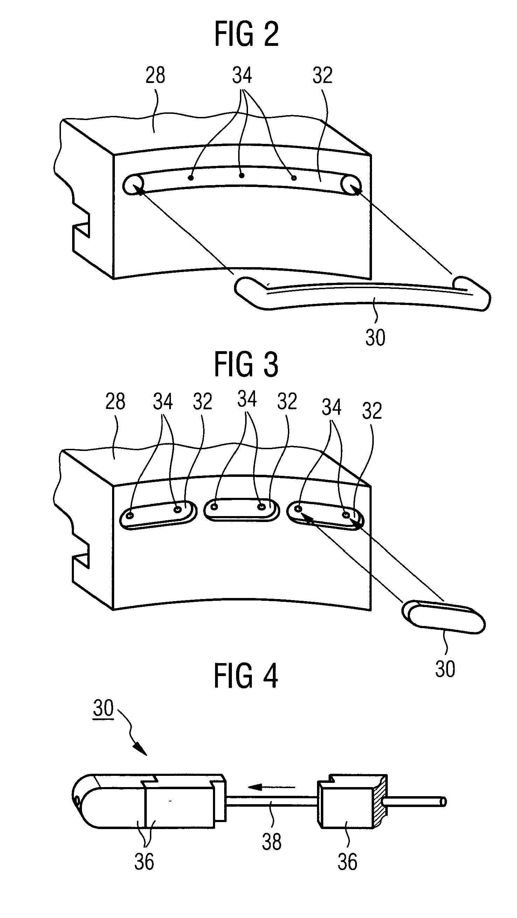

FIG 2 zeigt ein Bauteil eines Leitschaufelträgers 16, nämlich ein Isolationssegment 28. Auf seiner Oberfläche ist eine Vertiefung 32 eingebracht, in die das Dichtelement 30 eingelegt wird. Dabei ist die Vertiefung in Form einer Nut ausgelegt, so dass eine möglichst breite Sektion mit einem einzigen Dichtelement 30 abgedichtet werden kann. In den Boden der Vertiefung 32 sind Bohrungen 34 eingebracht, durch die ein Druckmedium zur Beaufschlagung des Dichtelements 30 eingebracht werden kann. Dadurch wird das Dichtelement 30 gegen eine ihm zugeordnete Kontaktfläche gepresst. Das Dichtelement 30 ist dabei an den Enden der Vertiefung 32 fixiert, wodurch die Ausdehnung des Dichtelements 30 und somit der Verbrauch an Druckmedium begrenzt wird.

FIG 3 zeigt eine alternative Ausführungsform. Die Vertiefungen 32 in dem Isolationssegment 28 sind hierbei kleiner ausgebildet als bei der Ausführungsform in FIG 2. Die Dichtelemente 30, von denen hier nur ein einziges gezeigt ist, fallen dementsprechend auch kleiner aus und ist in der hier gezeigten Ausführung flach ausgebildet. Wiederum befinden sich in den Vertiefungen 32 Bohrungen 34, durch die das Druckmedium zur Beaufschlagung des Dichtelements 30 zugeführt wird. Diese Ausführungsform mit mehreren kleineren Vertiefungen 32 kann je nach Auslegungsziel der Gasturbine erwünscht sein.

FIG 4 zeigt ein Dichtelement 30, das aus mehreren Gliedern 36 besteht, die in der Art einer Perlenkette auf einer Schnur 38 angeordnet sind. In dieser Ausführungsform lässt sich auch bei Gliedern 36 des Dichtelements 30, die aus einem unflexiblen Material bestehen, eine vergleichsweise hohe Flexibilität des gesamten Dichtelements 30 erreichen. Dies kann insbesondere von Vorteil sein, wenn kein Material für das Dichtelement 30 verfügbar ist, das bei einer ausreichenden Hitzebeständigkeit die gewünschte Flexibilität besitzt.

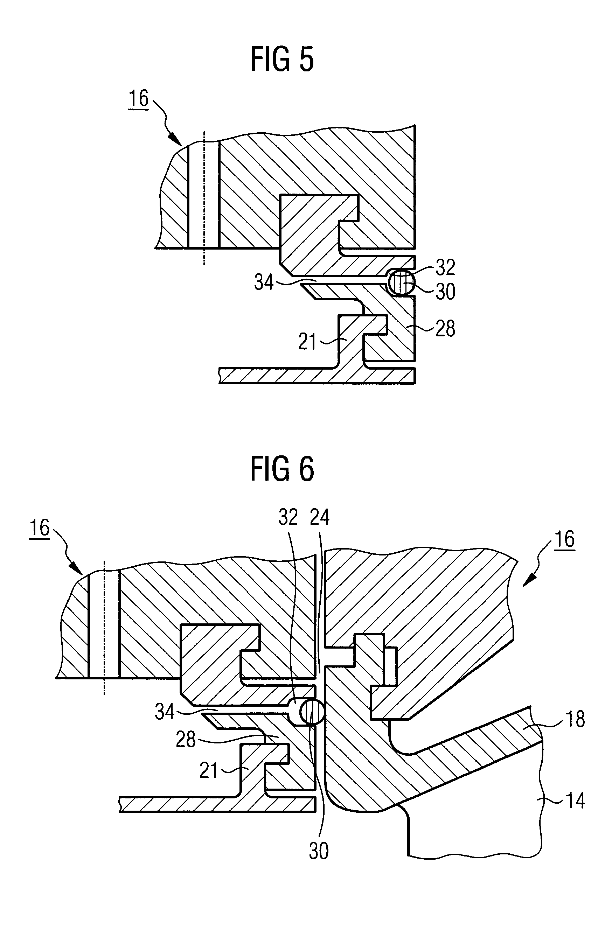

FIG 5 zeigt einen Leitschaufelträger 16 mit dem Isolationssegment 28, an dem der Führungsring 21 befestigt ist. In das Isolationssegment ist eine Vertiefung 32 eingebracht, in der das Dichtelement 30 liegt. Die FIG 5 zeigt weiterhin die Bohrung 34, durch die das Druckmedium zur Beaufschlagung des Dichtelements 30 eingebracht werden kann. In der FIG 5 ist die Lage des Dichtelements im drucklosen Zustand, z. B. während der Montage dargestellt. Dabei liegt das Dichtelement vollständig, d. h. überstandsfrei in der Vertiefung 32. Dies wird durch eine auf die Tiefe der Vertiefung 32 abgestimmte Wahl der Dicke des Dichtelements 30 erreicht. Auf diese Weise werden Beschädigungen des Dichtelements 30 bei der Montage des Leitschaufelträgers 16 verhindert.

FIG 6 zeigt zwei benachbarte Leitschaufelträger 16 mit einem zwischen ihnen ausgebildeten Spalt 24. Der linke Leitschaufelträger umfasst dabei, wie bereits in FIG 5 gezeigt, ein Isolationssegment, in das eine Vertiefung 32 mit einem Dichtelement 30 und einer Bohrung 34 eingebracht ist. An dem in der FIG 6 gezeigten rechten Leitschaufelträger 16 ist eine Leitschaufel 14 mit einer Plattform 18 befestigt. Dabei bildet die Plattform 18 eine dem Dichtelement 30 zugeordnete Kontaktfläche. Je nach Betriebszustand der Gasturbine kann nun die Breite des Spaltes 24 variieren. Um dennoch eine zuverlässige Abdichtung des Spaltes 24 gegen den Eintritt von heißem Strömungsmedium M zu erzielen, ist das Dichtelement 30 durch die Bohrung 34 mit einem Druckmedium beaufschlagt. Dadurch wird das Dichtelement an die zugeordnete Kontaktfläche der Plattform 18 gepresst. Dabei kann die Druckbeaufschlagung des Dichtelements 30 so angepasst werden, dass einerseits eine ausreichende Dichtung des Spaltes 24 erfolgt, andererseits keine zu hohe Reibung mit der zugeordneten Kontaktfläche der Plattform 18 entsteht. Somit kann eine Verformung durch thermische Ausdehnung der Bauteile der Gasturbine im Betrieb ohne Nachteile akzeptiert werden.

## Patentansprüche

1. Gasturbine (1) mit einer Anzahl von jeweils zu Laufschaufelreihen zusammengefassten, an einer Turbinenwelle (8) angeordneten Laufschaufeln (12) und mit einer Anzahl von jeweils zu Leitschaufelreihen zusammengefassten, mittels einer Mehrzahl von Leitschaufelträgern (16) an einem Turbinengehäuse befestigten Leitschaufeln (14), wobei eine Anzahl von Leitschaufelträgern (16) Vertiefungen (32) aufweist, in die jeweils ein Dichtelement (30) eingesetzt ist, und wobei das Dichtelement (30) zur Anpressung an eine zugeordnete Kontaktfläche mit einem Druckmedium beaufschlagbar ist.

2. Gasturbine (1) nach Anspruch 1, bei der die zugeordnete Kontaktfläche eine Oberfläche eines benachbarten Leitschaufelträgers (16) ist.

3. Gasturbine (1) nach Anspruch 1 oder 2, bei der Luft oder Dampf als Druckmedium vorgesehen sind.

4. Gasturbine (1) nach einem der Ansprüche 1 bis 3, bei der eine Anzahl von Vertiefungen (32) länglich in Form einer Nut ausgebildet ist.

5. Gasturbine (1) nach einem der Ansprüche 1 bis 4, bei der die orthogonal zur Leitschaufelträgeroberfläche gemessene Dicke des jeweiligen Dichtelements (30) gleich der Tiefe der Vertiefung (32) oder geringer als die Tiefe der Vertiefung (32) ist.

6. Gasturbine (1) nach einem der Ansprüche 1 bis 5, bei der das jeweilige Dichtelement (30) an einer Anzahl von Stellen der Vertiefung (32) fixiert ist.

7. Gasturbine (1) nach einem der Ansprüche 1 bis 6, bei der das jeweilige Dichtelement (30) aus einer Mehrzahl von miteinander verbundenen Gliedern (36) besteht.
